# EUROPÄISCHE PATENTSCHRIFT

(11) **EP 1 843 060 B1**
(45) Veröffentlichungstag und Bekanntmachung des Hinweises auf die Patenterteilung: **29.12.2010**
(21) Anmeldenummer: 07103020.9
(22) Anmeldetag: 26.02.2007
(51) Int. Cl.: F16F 9/05, F16F 9/38, B29D 22/00, D04B 39/00

(54) **Verschleißbeständige Luftfeder**
Wear-resistant pneumatic springs
Coussin d'air résistant à l'usure

(30) Priorität: 06.04.2006 DE 102006016140
(43) Veröffentlichungstag der Anmeldung: 10.10.2007
(73) Patentinhaber: ContiTech Luftfedersysteme GmbH, 30165 Hannover (DE)
(72) Erfinder: Reck, Siegfried, 31582, Nienburg (DE); Mahnken, Claus-Lüder, 27367, Ahausen (DE); Bank, Christoph, 31275, Lehrte (DE)
(74) Vertreter: Finger, Karsten

(56) Entgegenhaltungen:
- DE-A1- 3 937 819
- DE-A1- 10 106 064
- DE-A1- 19 738 468
- DE-A1-102004 007 332
- DE-B- 1 287 453
- DE-C1- 4 342 888
- DE-U1- 20 122 095
- FR-A1- 2 328 892
- JP-A- 11 094 002
- JP-A- 55 082 832
- JP-A- 2003 194 219

## Beschreibung

Die Erfindung betrifft eine Luftfeder mit einem Luftfederkolben, einem Luftfederdeckel und einem Luftfederbalg aus elastomerem Material mit in das elastomere Material eingebetteten Festigkeitsträgern.

Derartige Luftfedern sind häufig beispielsweise in Schienen- oder Straßenfahrzeugen, insbesondere in Lastkraftwagen im Einsatz. Der prinzipielle Aufbau und die Funktionsweise sind dem Fachmann daher bekannt.

Besonders aufgrund der hohen Qualität der zum Einsatz kommenden Werkstoffe, insbesondere der Festigkeitsträger, wird die Lebensdauer einer Luftfeder der genannten Art häufig nicht durch den Bruch eines Festigkeitsträgers, sondern durch den Verschleiß der Balgwand bestimmt.

Es ist daher bekannt, die Balgwand mit verschiedenen Stoffen zu beschichten, die die Gleitfähigkeit der Oberfläche verbessern

Die JP 55-076237 und die JP 2005-199761 zeigen Luftfedern für Schienenfahrzeuge, die eine reibungsarme Zwischenlage aus synthetischen Fasern aufweisen. Diese Zwischenlage ist in einem Bereich angeordnet, in dem der Luftfederbalg mit einem Stützteller intermittierend in Kontakt kommt, wobei durch Verdrehung des Luftfederbalges gegen den Stützteller um die Hauptachse der Luftfeder in diesem Kontaktbereich eine hohe Reibbelastung der Balgaußenwand auftritt.

Die Zwischenlage ist ringförmig und bedeckt nur den genannten Kontaktbereich. Eine weitergehende verschleißmindernde und damit lebensdauerverlängernde Wirkung für die übrige Balgwand ist nicht gegeben.

Die JP 55-082832 und die JP 54-086073 zeigen Luftfedern mit ähnlich wirkenden Zwischenlagen, die jedoch in der Einklemmung des Luftfederbalges an dem dem Stützteller gegenüberliegenden Ende des Luftfederbalges wirksam sind. Auch diese Zwischenlagen beschränken ihre Wirkung nur auf den genannten Teilbereich der Balgwand.

In der DE 10 2004 007 332 A1 ist eine Luftfeder offenbart, bei der der Luftfederbalg mit einem Gleitmittel beschichtet ist, das die Haftfähigkeit von Schmutz auf der Balgaußenwand herabsetzen soll. Das Gleitmittel kann dabei bereits bei der Vulkanisation, aber auch nach Fertigstellung des Balges aufgebracht werden.

Von dieser Beschichtung ist jedoch eine dauerhaft verschleißmindernde Wirkung nicht zu erwarten, da hier zwar die Reibung herabgesetzt wird, ein weitergehender mechanischer Schutz der Balgwand aber nicht gegeben ist.

Der Erfindung liegt die Aufgabe zugrunde, eine Luftfeder der eingangs geschilderten Art zu schaffen, bei der der Luftfederbalg eine gegenüber dem Stand der Technik verbesserte Lebensdauer aufweist.

Diese Aufgabe wird dadurch gelöst, dass der Luftfederbalg auf seiner in radialer Richtung gesehenen Außenfläche und/oder auf seiner in radialer Richtung gesehenen Innenfläche eine sich über die gesamte Außenfläche und/oder Innenfläche erstreckende Schutzschicht aus einer textilen Struktur aufweist, wobei die Schutzschicht auf der Außenfläche und/oder der Innenfläche angeordnet ist und mit dieser fest und unlösbar verbunden ist.

Eine derartige textile Struktur lässt sich verhältnismäßig einfach in Form eines ringförmig zusammengenähten oder rundgeklöppelten Strumpfes bereits bei der Vulkanisation der Bälge aufbringen und durch den Vulkanisationsvorgang sicher und unlösbar mit der elastomeren Balgwand verbinden. Sie ist auf der entsprechenden Oberfläche des Balges angeordnet, so dass die entsprechende Mantelfläche des Balges nim Wesentlichen mittels der Schutzschicht mit der Umgebung in Kontakt tritt. Das hat den Vorteil, dass die gesamte elastomere Mantelfläche gegen äußere Einflüsse geschützt ist. Bei Verschleiß durch den Betrieb der Luftfeder wird dementsprechend zunächst die Schutzschicht angegriffen, was die Lebensdauer des Balges deutlich erhöht.

In einer Weiterbildung der Erfindung ist die textile Struktur als ein textiles Gewirke ausgebildet.

Gewirke haben den Vorteil, dass eine gute konstruktionsbedingte Dehnung der Struktur einstellbar ist. Damit kann sich die Schutzschicht im Einsatz den Verformungen des Luftfederbalges besonders gut anpassen.

In einer Weiterbildung der Erfindung ist das Gewirke als Kettwirkware aus einem ersten Garn aus Filamenten mit einem Modul von mehr als 5N/1000dtex, bezogen auf 5% Dehnung und einem zweiten Garn aus Filamenten mit einem Modul von weniger als 2cN/1000dtex, bezogen auf 5% Dehnung aufgebaut ist, wobei das erste und das zweite Garn jeweils ein zusammenhängendes Netzwerk bilden und die Garne nicht umeinander gedreht sind.

Eine derartige elastische Kettwirkware, deren Dehnung nicht nur auf der Konstruktion des Gewirkes beruht, eignet sich gut für die Beschichtung von Luftfederbälgen, da die hohe Dehnbarkeit der Kettwirkware zu einer besonders guten Verformbarkeit führt und dadurch die Bewegungsfähigkeit des Luftfederbalges beim Abrollen auf dem Luftfederkolben nicht oder nicht nennenswert einschränkt. Der Aufbau aus zwei Garnen, von denen das eine elastisch, das andere nicht elastisch ist, gewährleistet eine gute Verarbeitbarkeit der Wirkware.

In einer Weiterbildung der Erfindung liegen das erste und das zweite Garn mindestens teilweise gemeinsam in den Maschen.

Diese Ausführung hat den Vorteil, dass die jeweils zusammenhängenden Netzwerke der Garne miteinander verbunden sind und so besser verarbeitbar sind. Dadurch, dass die Garne zwar mindestens teilweise in gemeinsamen Maschen liegen, aber dennoch voneinander unabhängige Netzwerke bilden, bleibt die Wirkware auch bei Zerstörung nur eines Netzwerkes, beispielsweise durch Abrieb, noch stabil und einsatzfähig.

In einer weiteren Ausführungsform der Erfindung ist das erste Garn aus Polyamidfilamenten aufgebaut.

Polyamid weist eine gute Zugfestigkeit bei gleichzeitig guten Dehnungseigenschaften auf.

In einer weiteren Ausführungsform der Erfindung ist das erste Garn ein Polyamid 6 mit einem Titer zwischen 20 und 60 dtex.

Ein derartiges Polyamid weist eine besonders für diesen Anwendungsfall besonders geeignete Zugfestigkeit bei gleichzeitig guten Dehnungseigenschaften auf.

In einer weiteren Ausführungsform der Erfindung ist das erste Garn aus Polyesterfilamenten aufgebaut.

Polyester ist gegen die bei der Vulkanisierung der Luftfederbälge auftretenden Temperaturen besonders gut beständig und weist eine gute Haftfähigkeit zu der umgebenden Elastomermatrix auf.

In einer weiteren Ausführungsform der Erfindung ist das zweite Garn ein elastisches Polyurethan.

Elastisches Polyurethan ist als elastisches Material gut geeignet, da es aufgrund seiner hohen Elastizität im Betrieb der Luftfeder die unterschiedlichen Dehnungen des Luftfederbalges nur wenig behindert.

In einer weiteren Ausführungsform der Erfindung ist das zweite Garn ein Elasthan mit einem Gesamttiter von 20 bis 60 dtex.

Diese Garnart hat sich in Versuchen als besonders vorteilhaft für die Verarbeitbarkeit und die Lebensdauer der Luftfederbälge herausgestellt.

In einer weiteren Ausführungsform der Erfindung ist die Kettwirkware mit zwei Legeschienen nach folgendem Muster gewirkt, nämlich
- Legeschiene 1 mit elastischem Garn in geschlossener Tuchbindung der Abfolge 1-0-1/1-2-1 und
- Legeschiene 2 mit nicht elastischem Garn in geschlossener Trikotbindung der Abfolge 2-3-2/1-0-1

In einer weiteren Ausführungsform der Erfindung ist die Kettwirkware in gegenlegiger Konstruktion aufgebaut.

Mit einer Kettwirkware nach dieser Konstruktion lässt sich im Betrieb der Luftfederbälge eine besonders gute Lebensdauer erreichen. Dabei sind 4 Auflegearten möglich, nämlich Garn 1 oder Garn 2 außen und Wirkrichtung in Richtung der Hauptachse der Luftfeder oder Wirkrichtung senkrecht zur Richtung der Hauptachse der Luftfeder. Von diesen 4 Kombinationen erwies sich das Auflegen in Wirkrichtung nicht nur ökonomisch günstiger sondern auch in dynamischer Haltbarkeit als besser. Die außenliegenden Polyamidfasern schützen das Netzwerk besser von Abrieb. Senkrecht zur Wirkrichtung liegendes Textil hat den Nachteil dass in der Rollfalte der Bälge lange Garne in Richtung der Hauptachse der Luftfeder, nämlich in der Rollfalte parallel zur Hauptachse der Luftfeder liegen und frühzeitig dynamisch brechen. In Wirkrichtung verlegtes Gewebe verhält sich dynamisch besser, da nur ganz kurze Garnstücke in Richtung der Hauptachse der Luftfeder verlaufen und damit die Wirkware dynamisch stabiler ist. Die gegenlegige Konstruktion hat dabei den Vorteil, dass sich die Wirkware bei der Verarbeitung weniger verzieht.

Bei den erfindungsgemäßen fertigen Luftfederbälgen kommt es im Betrieb zunächst zu einer Verformung der Elasthanschicht, die sich als verschleißmindernde Schicht gleichmäβig zwischen das übrige Polyamidnetzwerk setzt. Im Laufe des Betriebes der Luftfeder tritt dann ein Verlust des Zusammenhangs des Polyamidnetzwerkes ein. Die elastomere Balgwand bleibt aber auch in diesem Fall vor starkem Abrieb geschützt, da die aus der Kombination von Elasthan und Polyamid oder Polyester bestehenden Maschen tief in der Elastomermatrix sitzen und einen deutlichen Abrieb der Elastomermatrix verhindern.

In einer Weiterbildung der Erfindung ist auf der Kettwirkware eine verschleißvermindernde Gleitbeschichtung aufgebracht.

In einer weiteren Ausführungsform der Erfindung ist die verschleißvermindernde Gleitbeschichtung aus einer flexiblen Trägerschicht und Gleitkörpern aufgebaut.

In einer weiteren Ausführungsform der Erfindung besteht die flexible Trägerschicht überwiegend aus Polyurethan.

In einer weiteren Ausführungsform der Erfindung bestehen die Gleitkörper aus fluorhaltigen Polymeren.

In einer weiteren Ausführungsform der Erfindung bestehen die Gleitkörper aus PTFE.

In einzelnen Einsatzfällen ist es möglich, dass auch der Einsatz der beschriebenen Wirkware nicht unter allen Wetter- und Feuchtigkeitsbedingungen einen hohen Verschleißwiderstand garantieren kann. In diesen Fällen kann sich die Behandlung der Kettwirkware mit einer Kombinationsschicht aus Polyurethan und einem Gleitmittel, bevorzugt aus dem Bereich der Fluorpolymere gerade hier als besonders vorteilhaft erweisen. Im Gegensatz zu reinen Polyamiden ergibt sich dabei eine positive Verbindung der Polyurethane der Beschichtungsmittel mit dem Polyurethan des Elasthans, so dass sich überraschenderweise eine weitere deutliche Verlängerung des Verschleißwiderstandes der Kettwirkware ergibt.

Es zeigt sich also, dass mit der Ausrüstung der Luftfederbälge mit einer erfindungsgemäßen Textilbeschichtung eine deutliche Lebensdauersteigerung möglich ist. Dabei ist eine textile Schutzschicht einer herkömmlichen Beschichtung überlegen, da die textile Struktur einen deutlich größeren mechanischen Schutz vor Verschleiß bieten kann. Erst nach Auflösung des Textilverbundes der Kettwirkware kommt es zu einem verstärkten Abrieb der Elastomermatrix. Durch den Einsatz der erfindungsgemäßen Kettwirkware sind die Beeinträchtigungen der Verformungsfähigkeit der Bälge und damit der Einfluss auf die Federcharakteristik der Luftfedern gut beherrschbar.

Nachstehend wird die Erfindung anhand der Zeichnung näher erläutert. Es zeigt
- Fig. 1: einen Längsschnitt einer erfindungsgemäßen Luftfeder mit einer Kettwirkware als textile Schutzschicht auf der äußeren radialen Mantelfläche des Luftfederbalges und
- Fig. 2: eine Prinzipdarstellung der erfindungsgemäßen Kettwirkware

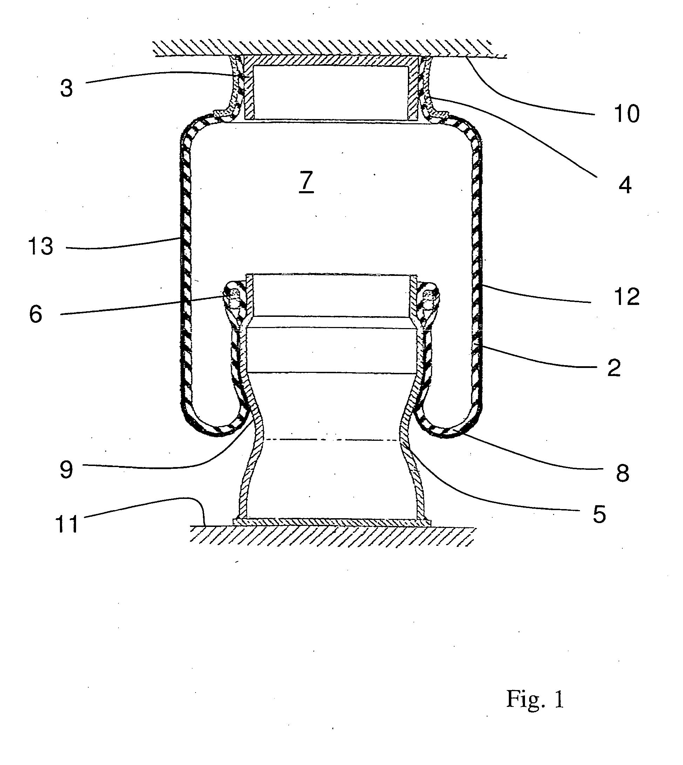

In der Fig. 1 ist eine Luftfeder 1 mit einem Rollbalg 2 dargestellt. Der Rollbalg 2 ist aus elastomerem Werkstoff gebildet und ist an seinem ersten axialen Ende an einem Luftfederdeckel 3 mittels eines Spannringes 4 gasdicht befestigt und an seinem zweiten axialen Ende an einem Luftfederkolben oder auch Abrollkolben 5 ebenfalls mit einem Spannring 6 gasdicht befestigt. Der Abrollkolben 5 ist dabei so angeordnet, dass er mit seinem dem zweiten Ende des Luftfederbalges 2 zugeordneten Ende in das Innere 7 des Luftfederbalges 2 hineinragt und der Luftfederbalg 2 in bekannter Weise eine Rollfalte 8 bildet, die sich bei Relativbewegungen zwischen Luftfederdeckel 3 und Abrollkolben 5 längs der Hauptachse der Luftfeder 1 auf der äußeren Mantelfläche 9 des Abrollkolbens 5 abrollt.

Der Luftfederdeckel 3 ist an einer nicht genauer dargestellten Karosserie 10 und der Abrollkolben 5 an einem nicht genauer dargestellten Fahrwerksteil 11 eines nicht gezeigten Fahrzeuges befestigt.

Der Luftfederbalg 2 weist auf seiner äußeren radialen Mantelfläche 12 eine textile Schutzschicht 13 auf, die sich über die gesamte Mantelfläche 12 erstreckt. Die textile Schutzschicht 13 ist aus einer Kettwirkware aufgebaut, die durch Vulkanisation mit dem elastomeren Werkstoff des Luftfederbalges 2 fest verbunden ist. Die hohe Dehnungsfähigkeit der textilen Schutzschicht 13 ermöglicht eine gute Verformung der Schutzschicht auch in der Rollfalte 8.

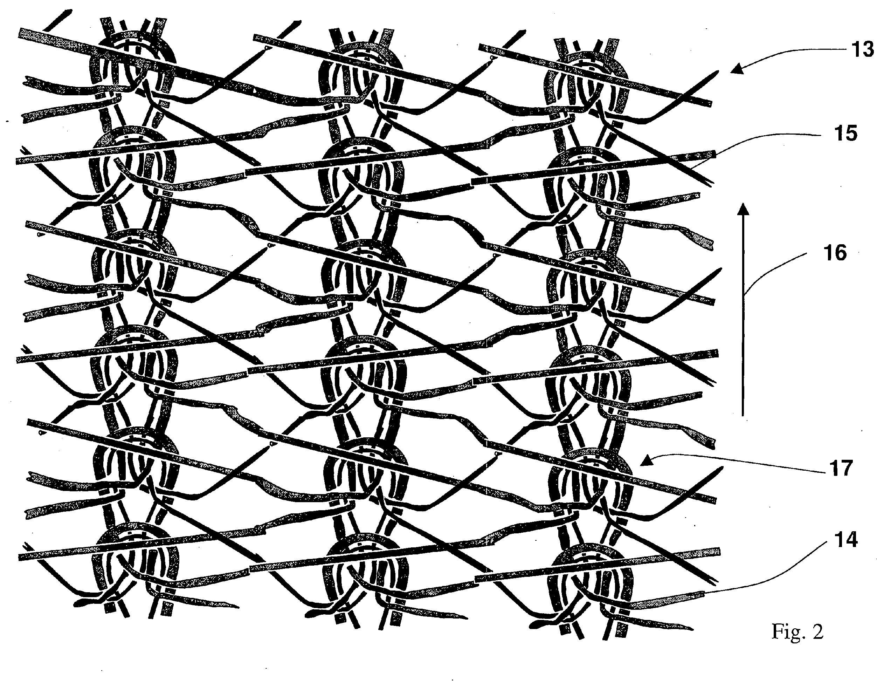

In Fig. 2 ist die textile Schutzschicht 13 in einer Ausschnittvergrößerung prinzipiell dargestellt.

Die Schicht 13 ist als Kettwirkware aus einem ersten Garn 14 aus Elasthan und einem zweiten Garn 15 aus Polyamid gewirkt. Die Wirkrichtung 16 verläuft in dieser Darstellung vom unteren Rand der Figur zum oberen Rand der Figur und liegt parallel zur Hauptachse der Luftfeder 1. Die Darstellung zeigt, dass das erste Garn 14 nach einem Wirkmuster in geschlossener Tuchbindung der Abfolge 1-0-1/1-2-1 und das zweite Garn 15 nach einem Wirkmuster in geschlossener Trikotbindung der Abfolge 2-3-2/1-0-1 gewirkt ist. Das Gewirke ist in eine hier nicht gezeigte Elastomermatrix aus peroxidisch vernetztem Ethylen-Propylen-Kautschuk eingebettet. In allen Maschen 17 der Kettwirkware 13 sind beide Garne 14 und 15 zusammengewirkt. Die Garne 14 und 15 bilden jedoch jedes für sich ein geschlossenes Netzwerk, das unabhängig vom jeweils anderen Bestand hat. Wird also durch Abrieb zunächst die außenliegende Fadenlage aus Polyamidgarn 15 zerstört, wird die Elastomermatrix noch solange durch das verbleibende, eigenständige Netzwerk aus Elasthangarn 14 geschützt, bis auch dieses zerstört ist. Erst dann setzt verstärkter Abrieb der Elastomermatrix ein.

### Bezugszeichenliste

- 1: Luftfeder
- 2: Luftfederbalg
- 3: Luftfederdeckel
- 4: Spannring
- 5: Abrollkolben / Luftfederkolben
- 6: Spannring
- 7: Innenraum des Balges 2
- 8: Rollfalte
- 9: Mantelfläche des Kolbens 5
- 10: Karosserie
- 11: Fahrwerksteil
- 12: äußere radiale Mantelfläche des Balges 2
- 13: textile Schutzschicht / Kettwirkware
- 14: Elasthangarn
- 15: Polyamidgarn
- 16: Wirkrichtung
- 17: Maschen der Kettwirkware 13

## Patentansprüche

1. Luftfeder (1) mit einem Luftfederkolben (5), einem Luftfederdeckel (3) und einem Luftfederbalg (2) aus elastomerem Material mit in das elastomere Material eingebetteten Festigkeitsträgern, **dadurch gekennzeichnet, dass** der Luftfederbalg (2) auf seiner in radialer Richtung gesehenen Außenfläche (12) und/oder auf seiner in radialer Richtung gesehenen Innenfläche (12) eine sich über die gesamte Außenfläche (12) und/oder Innenfläche (12) erstreckende Schutzschicht (13) aus einer textilen Struktur aufweist, wobei die Schutzschicht (13) auf der Außenfläche (12) und/oder der Innenfläche (12) angeordnet ist und mit dieser fest und unlösbar verbunden ist.

2. Luftfeder nach Anspruch 1, **dadurch gekennzeichnet, dass** die textile Struktur (13) als ein textiles Gewirke ausgebildet ist.

3. Luftfeder nach Anspruch 2, **dadurch gekennzeichnet, dass** das Gewirke als Kettwirkware (13) aus einem ersten Garn (14) aus Filamenten mit einem Modul von mehr als 5N/1000dtex, bezogen auf 5% Dehnung und einem zweiten Garn (15) aus Filamenten mit einem Modul von weniger als 2cN/1000dtex, bezogen auf 5% Dehnung aufgebaut ist, wobei das erste (14) und das zweite Garn (15) jeweils ein zusammenhängendes Netzwerk bilden und die Garne (14, 15) nicht umeinander gedreht sind.

4. Luftfeder (1) nach Anspruch 3, **dadurch gekennzeichnet, dass** das erste (14) und das zweite Garn (15) mindestens teilweise gemeinsam in den Maschen (17) liegen.

5. Luftfeder (1) nach Anspruch 3 oder 4, **dadurch gekennzeichnet, dass** das erste Garn (14) aus Polyamidfilamenten aufgebaut ist.

6. Luftfeder (1) nach Anspruch 5, **dadurch gekennzeichnet, dass** das erste Garn (14) ein Polyamid 6 mit einem Titer zwischen 20 und 60 dtex ist

7. Luftfeder (1) nach Anspruch 3 oder 4, **dadurch gekennzeichnet, dass** das erste Garn (14) aus Polyesterfilamenten aufgebaut ist

8. Luftfeder (1) nach mindestens einem der vorhergehenden Ansprüche, **dadurch gekennzeichnet, dass** das zweite Garn (15) ein elastisches Polyurethan ist

9. Luftfeder (1) nach Anspruch 8, **dadurch gekennzeichnet, dass** das zweite Garn (15) ein Elasthan mit einem Gesamttiter von 20 bis 6 dtex ist.

10. Luftfeder (1) nach mindestens einem der vorherigen Ansprüche, **dadurch gekennzeichnet, dass** die Kettwirkware (13) mit zwei Legeschienen nach folgendem Muster gewirkt ist, nämlich
• Legeschiene 1 mit elastischem Garn (14) in geschlossener Tuchbindung der Abfolge 1-0-1/1-2-1 und
• Legeschiene 2 mit nicht elastischem Garn (15) in geschlossener Trikotbindung der Abfolge 2-3-2/1-0-1

11. Luftfeder (1) nach mindestens einem der vorherigen Ansprüche, **dadurch gekennzeichnet, dass** die Kettwirkware (13) in gegenlegiger Konstruktion aufgebaut ist.

12. Luftfeder (1) nach mindestens einem der vorherigen Ansprüche, **dadurch gekennzeichnet, dass** auf der Kettwirkware (13) eine verschleißvermindernde Gleitbeschichtung aufgebracht ist.

13. Luftfeder (1) nach Anspruch 12, **dadurch gekennzeichnet, dass** die verschleißvermindernde Gleitbeschichtung aus einer flexiblen Trägerschicht und Gleitkörpern aufgebaut ist.

14. Luftfeder (1) nach Anspruch 13, **dadurch gekennzeichnet, dass** die flexible Trägerschicht überwiegend aus Polyurethan besteht.

15. Luftfeder (1) nach Anspruch 13, **dadurch gekennzeichnet, dass** die Gleitkörper aus fluorhaltigen Polymeren bestehen.

16. Luftfeder (1) nach Anspruch 13, **dadurch gekennzeichnet, dass** die Gleitkörper aus PTFE bestehen.

## Claims

1. Pneumatic spring (1) within a pneumatic spring piston (5), with a pneumatic spring cover (3) and with a pneumatic spring concertina (2) made from elastomeric material and having reinforcements embedded into the elastomeric material, **characterized in that** the pneumatic spring concertina (2) has, on its outer face (12) seen in the radial direction and/or on its inner face (12) seen in the radial direction, a protective layer (13) extending over the entire outer face (12) and/or inner face (12) and consisting of a textile structure, the protective layer (13) being arranged on the outer face (12) and/or on the inner face (12) and being connected to this fixedly and unreleaseably.

2. Pneumatic spring according to Claim 1, **characterized in that** the textile structure (13) is formed as a textile knitted fabric.

3. Pneumatic spring according to Claim 2, **characterized in that** the knitted fabric is constructed as a warp knit (13) from a first yarn (14) composed of filaments with a modulus of more than 5N/1000dtex in relation to 5% extension and from a second yarn (15) composed of filaments with a modulus of less than 2cN/1000dtex in relation to 5% extension, the first (14) and the second (15) yarn forming in each case a coherent network, and the yarns (14, 15) not being twisted one around the other.

4. Pneumatic spring (1) according to Claim 3, **characterized in that** the first (14) and the second (15) yarn lie at least partially together in the meshes (17).

5. Pneumatic spring (1) according to Claim 3 or 4, **characterized in that** the first yarn (14) is constructed from polyamide filaments.

6. Pneumatic spring (1) according to Claim 5, **characterized in that** the first yarn (14) is a polyamide 6 with a titre of between 20 and 60 dtex.

7. Pneumatic spring (1) according to Claim 3 or 4, **characterized in that** the first yarn (14) is constructed from polyester filaments.

8. Pneumatic spring (1) according to at least one of the preceding claims, **characterized in that** the second yarn (15) is an elastic polyurethane.

9. Pneumatic spring (1) according to Claim 8, **characterized in that** the second yarn (15) is an elasthane with an overall titre of 20 to 6 dtex.

10. Pneumatic spring (1) according to at least one of the preceding claims, **characterized in that** the warp knit (13) is knitted by means of two guide bars according to the following pattern, to be precise
• guide bar 1 with elastic yarn (14) in a closed plain weave with the sequence 1 - 0 - 1/1 - 2 - 1 and
• guide bar 2 with non-elastic yarn (15) in a closed tricot weave with the sequence 2 - 3 - 2/1 - 0 - 1.

11. Pneumatic spring (1) according to at least one of the preceding claims, **characterized in that** the warp knit (13) is constructed in counternotation.

12. Pneumatic spring (1) according to at least one of the preceding claims, **characterized in that** a wear-reducing sliding coating is applied to the warp knit (13).

13. Pneumatic spring (1) according to Claim 12, **characterized in that** the wear-reducing sliding coating is constructed from a flexible carrier layer and sliding bodies.

14. Pneumatic spring (1) according to Claim 13, **characterized in that** the flexible carrier layer consists predominantly of polyurethane.

15. Pneumatic spring (1) according to Claim 13, **characterized in that** the sliding bodies consist of fluorine-containing polymers.

16. Pneumatic spring (1) according to Claim 13, **characterized in that** the sliding bodies consist of PTFE.

## Revendications

1. Amortisseur pneumatique (1) présentant un piston (5) d'amortisseur pneumatique, un couvercle (3) d'amortisseur pneumatique et un soufflet (2) d'amortisseur pneumatique en matériau élastomère, des renforts étant incorporés dans le matériau élastomère,
**caractérisé en ce que**
le soufflet (2) de l'amortisseur pneumatique présente sur sa surface extérieure (12) vue dans la direction radiale et/ou sur sa surface intérieure (12) vue dans la direction radiale une couche de protection (13) à structure textile qui s'étend sur toute la surface extérieure (12) et/ou sur toute la surface intérieure (12) et
**en ce que** la couche de protection (13) est disposée sur la surface extérieure (12) et/ou sur la surface intérieure (12) et est reliée à ces dernières de manière solidaire et non libérable.

2. Amortisseur pneumatique selon la revendication 1, **caractérisé en ce que** la structure textile (13) est configurée comme tricot textile.

3. Amortisseur pneumatique selon la revendication 2, **caractérisé en ce que** le tricot est constitué d'un tricot (13) à chaîne en un premier fil (14) constitué de filaments dont le module est supérieur à 5 N/1 000 dtex pour un allongement de 5 % et d'un deuxième fil (15) en filaments dont le module est inférieur à 2 cN/1 000 dtex pour un allongement de 5 %, **en ce que** le premier fil (14) et le deuxième fil (15) forment chacun un réseau continu et **en ce que** les fils (14, 15) se sont pas torsadés l'un autour de l'autre.

4. Amortisseur pneumatique (1) selon la revendication 3, **caractérisé en ce que** le premier fil (14) et le deuxième fil (15) sont situés au moins en partie ensemble dans les mailles (17).

5. Amortisseur pneumatique (1) selon les revendications 3 ou 4, **caractérisé en ce que** le premier fil (14) est constitué de filaments de polyamide.

6. Amortisseur pneumatique (1) selon la revendication 5, **caractérisé en ce que** le premier fil (14) est un polyamide 6 dont le titre est compris entre 20 et 60 dtex.

7. Amortisseur pneumatique (1) selon les revendications 3 ou 4, **caractérisé en ce que** le premier fil (14) est constitué de filaments de polyester.

8. Amortisseur pneumatique (1) selon au moins l'une des revendications précédentes, **caractérisé en ce que** le deuxième fil (15) est un polyuréthane élastique.

9. Amortisseur pneumatique (1) selon la revendication 8, **caractérisé en ce que** le deuxième fil (15) est un élastane dont le titre global est compris entre 20 et 6 dtex.

10. Amortisseur pneumatique (1) selon au moins l'une des revendications précédentes, **caractérisé en ce que** le tricot (13) à chaîne est tricoté à l'aide de deux rails à passette selon le motif suivant, à savoir
- rail à passette 1 avec le fil élastique (14) en armure de toile fermée en succession 1-0-1/1-2-1 et
- rail à passette 2 avec le fil (15) non élastique en armure de tricot fermée et succession 2-3-2/1-0-1.

11. Amortisseur pneumatique (1) selon au moins l'une des revendications précédentes, **caractérisé en ce que** le tricot (13) à chaîne a une structure symétrique.

12. Amortisseur pneumatique (1) selon au moins l'une des revendications précédentes, **caractérisé en ce qu'**un revêtement glissant diminuant l'usure est appliqué sur le tricot (13) à chaîne.

13. Amortisseur pneumatique (1) selon la revendication 12, **caractérisé en ce que** le revêtement glissant diminuant l'usure est constitué d'une couche flexible de support et de corps glissants.

14. Amortisseur pneumatique (1) selon la revendication 13, **caractérisé en ce que** la couche flexible de support est constituée principalement de polyuréthane.

15. Amortisseur pneumatique (1) selon la revendication 13, **caractérisé en ce que** les corps glissants sont constitués de polymères fluorés.

16. Amortisseur pneumatique (1) selon la revendication 13, **caractérisé en ce que** les corps glissants sont constitués de PTFE.
